# EUROPEAN PATENT APPLICATION

(11) **EP 4 654 358 A1**
(43) Date of publication of application: **26.11.2025**
(21) Application number: 23947091.7
(22) Date of filing: 01.08.2023
(51) Int. Cl.: H01M 50/30

(54) **BATTERY CELL, BATTERY, AND ELECTRIC DEVICE**

(71) Applicant: Contemporary Amperex Technology Co., Limited, Ningde, Fujian 352100 (CN)
(72) Inventor: WANG, Liqin, Ningde, Fujian 352100 (CN); CHENG, Qi, Ningde, Fujian 352100 (CN); CHEN, Long, Ningde, Fujian 352100 (CN); ZHENG, Yulian, Ningde, Fujian 352100 (CN); LI, Quankun, Ningde, Fujian 352100 (CN)
(74) Representative: Ziebig Hengelhaupt Intellectual Property Attorneys Patentanwaltskanzlei PartGmbB
(86) International application number: PCT/CN2023/110596
(87) International publication number: WO 2025/025143

(57) **Abstract**

This application provides a battery cell, a battery, and an electric apparatus. The battery cell includes a housing configured to accommodate an electrode assembly, where the housing includes a wall portion, an outer surface of the wall portion is provided with an accommodating groove extending along a first direction, a bottom wall of the accommodating groove is provided with a first through hole, and the first through hole is configured for communication between an internal space of the housing and an accommodating cavity of the accommodating groove; a gas-permeable assembly, at least partially disposed in the accommodating groove and spaced apart from the bottom wall of the accommodating groove, where the gas-permeable assembly includes a fixing member and a gas-permeable film, the fixing member is connected to the wall portion, the fixing member is provided with a second through hole extending along the first direction, the gas-permeable film includes a covering portion and a connecting portion disposed around the covering portion, the covering portion covers the second through hole along the first direction and is configured to discharge gas inside the battery cell, and the connecting portion is connected to the fixing member; and a support member, at least partially clamped between the bottom wall of the accommodating groove and the connecting portion. The battery cell has good air tightness and high reliability.

## Description

### TECHNICAL FIELD

This application relates to the field of battery technologies, and in particular, to a battery cell, a battery, and an electric apparatus.

### BACKGROUND

Energy conservation and emission reduction are key to the sustainable development of the automotive industry. Electric vehicles, due to their advantages in energy conservation and environmental protection, have become an important component of the sustainable development of the automotive industry. For electric vehicles, battery technology is an important factor in connection with their development.

In related technologies, battery cells have issues with seal failure and electrolyte leakage, affecting the reliability of the battery cells.

### SUMMARY

An embodiment of this application provides a battery cell, a battery, and an electric apparatus, where the battery cell has good air tightness and high reliability.

According to a first aspect, this application provides a battery cell including: a housing configured to accommodate an electrode assembly, where the housing includes a wall portion, an outer surface of the wall portion is provided with an accommodating groove extending along a first direction, a bottom wall of the accommodating groove is provided with a first through hole, and the first through hole is configured for communication between an internal space of the housing and an accommodating cavity of the accommodating groove; a gas-permeable assembly, at least partially disposed in the accommodating groove and spaced apart from the bottom wall of the accommodating groove, where the gas-permeable assembly includes a fixing member and a gas-permeable film, the fixing member is connected to the wall portion, the fixing member is provided with a second through hole extending along the first direction, the gas-permeable film includes a covering portion and a connecting portion disposed around the covering portion, the covering portion covers the second through hole along the first direction and is configured to discharge gas inside the battery cell, and the connecting portion is connected to the fixing member; and a support member, at least partially clamped between the bottom wall of the accommodating groove and the connecting portion.

The wall portion of the housing is provided with the gas-permeable assembly, where the gas-permeable assembly includes the fixing member and the gas-permeable film, the fixing member is provided with the second through hole extending along the first direction, and the gas-permeable film includes the covering portion and the connecting portion disposed around the covering portion. The covering portion covers the second through hole along the first direction and is configured to discharge gas inside the battery cell, where gas inside the battery cell can flow through the first through hole to the covering portion and be discharged to the outside of the battery cell through the second through hole, preventing excessive gas accumulation that could lead to thermal runaway of the battery cell. The connecting portion is connected to the fixing member, and the gas-permeable film prevents electrolyte inside the battery cell from flowing to the outside of the battery cell. The support member is configured to provide support to the connecting portion, reducing the risk of failure at the composite interface between the connecting portion and the fixing member, thus ensuring the tightness of the connection therebetween. This reduces the probability of seal failure and electrolyte leakage in the battery cell, improving the reliability of the battery cell.

In some embodiments, the support member is entirely annular, and the support member is disposed around the first through hole, and is sealingly engaged with the connecting portion and the bottom wall of the accommodating groove, separately.

Through the above arrangement, the support member can block the path of electrolyte inside the battery cell from flowing to the composite interface between the connecting portion and the fixing member, reducing or preventing the electrolyte from flowing to the composite interface between the connecting portion and the fixing member, thus ensuring the tightness of the connection therebetween. This effectively reduces the probability of seal failure and electrolyte leakage in the battery cell, improving the reliability of the battery cell.

In some embodiments, a side surface of the bottom wall of the accommodating groove facing the gas-permeable assembly is recessed with a groove, and the support member is partially accommodated in the groove.

Through the above arrangement, the groove can limit the position of the support member, facilitating the mounting and positioning of the support member. Additionally, during the operation of the battery cell, the support member is prevented from moving within the accommodating groove, which could affect the support provided to the connecting portion, thereby ensuring the support for the composite interface between the connecting portion and the fixing member.

In some embodiments, the accommodating groove includes a first accommodating section and a second accommodating section distributed along the first direction, the first accommodating section is recessed from the outer surface of the wall portion, a radial dimension of the first accommodating section is greater than a maximum radial dimension of the second accommodating section, a first step surface is connected between a side wall surface of the first accommodating section and a side wall surface of the second accommodating section, the fixing member is at least partially located in the first accommodating section and supported on the first step surface, and at least a portion of the gas-permeable film and/or at least a portion of the support member is disposed in the second accommodating section.

By adopting the above structure for the accommodating groove, the first step surface can provide support to the fixing member in the first direction, ensuring the support positioning of the fixing member and its connection requirements with the wall portion. At the same time, the first accommodating section and the second accommodating section are configured to accommodate and protect the components of the gas-permeable assembly.

In some embodiments, along the first direction, a depth of the first accommodating section is denoted as H1, and a thickness of the fixing member is denoted as T, where 0.3 ≤ H1/T ≤ 2.5.

By setting the value range of H1/T to 0.3-2.5, the first accommodating section can limit the position of the fixing member, while ensuring that the thickness of the fixing member in the first direction is moderate. During connection to the wall portion, this ensures a connection area with the side wall of the first accommodating section, while reducing a size by which the fixing member protrudes from the first accommodating section in the first direction, ensuring the assembly and connection effect of the fixing member in the accommodating groove.

In some embodiments, 1 ≤ H1/T ≤ 2.5.

By setting 1 ≤ H1/T ≤ 2.5, it can be ensured the fixing member is entirely located in the first accommodating section, meeting the connection requirements with the side wall of the first accommodating section, and the fixing member does not protrude from the wall portion, ensuring smooth assembly and avoiding interference with the mounting of gas components of the battery cell.

In some embodiments, the second accommodating section includes a first accommodating sub-section and a second accommodating sub-section distributed along the first direction, a radial dimension of the first accommodating sub-section is greater than a radial dimension of the second accommodating sub-section and smaller than the radial dimension of the first accommodating section, the first step surface is connected between a side wall surface of the first accommodating sub-section and the side wall surface of the first accommodating section, at least a portion of the gas-permeable film is located in the first accommodating sub-section, and at least a portion of the support member is located in the second accommodating sub-section.

Through the above arrangement, the accommodating groove can form a stepped groove with progressively decreasing radial dimensions, ensuring the accommodation requirements for the fixing member, the gas-permeable film, and the support member, while meeting their mounting and positioning requirements.

In some embodiments, along the first direction, a depth of the first accommodating sub-section is denoted as H2, and a thickness of the gas-permeable film is denoted as M, where 0 ≤ H2-M ≤ 0.7 mm.

By setting 0 ≤ H2-M ≤ 0.7 mm, interference between the gas-permeable film and the first accommodating sub-section during assembly is prevented, ensuring the connection between the fixing member and the wall portion.

In some embodiments, along the first direction, a depth of the second accommodating sub-section is denoted as H3, and a thickness of the support member is denoted as Q, where 0.1 ≤ H3/Q ≤ 0.95.

By setting 0.1 ≤ H3/Q ≤ 0.95, the support member can be in a compressed state when mounted between the bottom wall and the connecting portion, ensuring tight contact with the bottom wall and the connecting portion, achieving electrolyte isolation, and improving the air tightness of the battery cell.

In some embodiments, along a radial direction of the first through hole, a gap exists between the support member and a side wall of the second accommodating sub-section.

Through the above arrangement, when the fixing member is connected to the wall portion by welding or other methods, the heat generated by welding does not affect the support member. Additionally, when the support member includes an elastic sealing ring, this arrangement provides space for compressive deformation of the elastic sealing ring, ensuring the sealing effect.

In some embodiments, along the radial direction of the first through hole, an outer diameter of the second accommodating sub-section is denoted as D1, and an outer diameter of the support member is denoted as D2, where 0.2 ≤ D2/D1 ≤ 0.95.

In some embodiments, the support member includes an elastic sealing ring, and the elastic sealing ring is compressed in the first direction and clamped between the connecting portion and the bottom wall of the accommodating groove.

As the support member includes the elastic sealing ring, and the elastic sealing ring is compressed in the first direction and clamped between the connecting portion and the bottom wall of the accommodating groove, a compressive force is provided to the composite interface between the connecting portion and the fixing member in the first direction. This provides support to the connecting portion, preventing delamination at the composite interface between the connecting portion and the fixing member, thus ensuring sealing performance. Additionally, this arrangement ensures that the elastic sealing ring sealingly engages with the bottom wall of the accommodating groove and the connecting portion, enabling the elastic sealing ring to block the path of electrolyte inside the battery cell from flowing to the composite interface between the connecting portion and the fixing member, and reducing or preventing the electrolyte from flowing to the composite interface, thus effectively ensuring the tightness of the connection therebetween.

In some embodiments, a quantity of the elastic sealing rings is two or more, and the two or more elastic sealing rings are coaxially arranged and distributed along the radial direction of the first through hole.

By setting the quantity of the elastic sealing rings to two or more, the two or more elastic sealing rings provide multiple layers of barrier protection, effectively blocking the path of electrolyte inside the battery cell from flowing to the composite interface between the connecting portion and the fixing member, and reducing or preventing the electrolyte from flowing to the composite interface.

In some embodiments, along the first direction, an orthographic projection of the elastic sealing ring is in a shape of a circular ring, an elliptical ring, or a polygonal ring.

As the orthographic projection of the elastic sealing ring along the first direction is in the shape of a circular ring, an elliptical ring, or a polygonal ring, support is ensured for the connecting portion and the fixing member at all positions along the circumferential direction of the first through hole, while meeting the requirement of surrounding the first through hole, blocking the path of electrolyte inside the battery cell from flowing to the composite interface between the connecting portion and the fixing member.

In some embodiments, a quantity of the second through holes is plural, and the second through holes are spaced apart on the fixing member.

By setting the quantity of the second through holes to two or more, the exhaust requirements are ensured. At the same time, the size of each second through hole is moderate, avoiding excessive diameter that could affect the strength of the fixing member, and preventing overly small diameter that could impact gas permeability efficiency. Additionally, a region between two adjacent second through holes can be attached to the gas-permeable film. When gas inside the battery cell acts on the gas-permeable film during discharge to the outside of the battery cell through the gas-permeable film, the fixing member provides a force opposite to the internal pressure of the battery cell to the gas-permeable film through the region between two adjacent second through holes, reducing deformation of the gas-permeable film, and improving the overall internal pressure resistance of the gas-permeable assembly, thus enhancing the reliability of the battery cell.

In some embodiments, a diameter of the second through hole ranges from 0.5 mm to 3 mm.

By setting the diameter of the second through hole to range from 0.5 mm to 3 mm, the exhaust requirements of the second through hole are ensured. This facilitates setting of the two or more second through holes, ensuring the strength of the fixing member and improving the gas permeability efficiency of the second through hole.

In some embodiments, the second through hole is one, and along the radial direction of the first through hole, a minimum vertical distance between an outer edge of the gas-permeable film and a hole wall of the second through hole is denoted as N, where N ranges from 1 mm to 6 mm; or, the second through holes are plural, and along the radial direction of the first through hole, multiple minimum vertical distances exist between the outer edge of the gas-permeable film and hole walls of the multiple second through holes, where a minimum value of the multiple minimum vertical distances is denoted as N, and N ranges from 1 mm to 6 mm.

Through the above arrangement, whether one or more second through holes are used, the distance between the hole wall of the second through hole and the edge of the gas-permeable film is moderate, ensuring the bonding strength between the gas-permeable film and the fixing member, while ensuring the gas permeability effect.

In some embodiments, along the radial direction of the first through hole, a first vertical distance between the outer edge of the gas-permeable film and an outer edge of the fixing member is denoted as d, where d ranges from 1 mm to 5 mm.

By setting the value range of d to 1 mm-5 mm, the value of d is moderate, ensuring that residual heat from laser welding does not melt the gas-permeable film when the fixing member is connected to the wall portion by welding or other methods, avoiding an excessively large d value, and ensuring the quantity of gas-permeable holes, thus ensuring the gas permeability effect.

In some embodiments, the housing includes a shell and an end cover assembly, the shell has an opening, the end cover assembly seals the opening, and one of the shell and the end cover assembly includes the wall portion.

According to a second aspect, this application provides a battery including the battery cell described above.

According to a third aspect, this application provides an electric apparatus including the battery described above, where the battery is configured to provide electric energy.

The above description is merely an overview of the technical solutions of this application. To enable a clearer understanding of the technical means of this application and to implement them in accordance with the contents of the specification, and to make the above and other objectives, features, and advantages of this application more apparent and understandable, specific embodiments of this application are provided below.

### BRIEF DESCRIPTION OF DRAWINGS

By reading the detailed description of the preferred embodiments below, various other advantages and benefits will become clear to those skilled in the art. The accompanying drawings are merely intended to illustrate the preferred embodiments and are not intended to limit this application. In the accompanying drawings, identical components are denoted by identical reference signs. In the accompanying drawings:
FIG. 1 is a schematic structural diagram of a vehicle provided by an embodiment of this application;
FIG. 2 is a schematic structural diagram of a battery pack provided by an embodiment of this application;
FIG. 3 is a schematic exploded structural diagram of a battery cell provided by an embodiment of this application;
FIG. 4 is a schematic partial structural diagram of a battery cell provided by an embodiment of this application;
FIG. 5 is a cross-sectional view along the A-A direction in FIG. 4;
FIG. 6 is a partial enlarged view at B in FIG. 5;
FIG. 7 is a partial exploded view of a battery cell provided by an embodiment of this application;
FIG. 8 is a partial cross-sectional view of a battery cell provided by another embodiment of this application;
FIG. 9 is a partial enlarged view of a battery cell provided by still another embodiment of this application.

Reference signs in the specific embodiments are as follows:
1000. vehicle;
100. battery; 200. controller; 300. motor;
10. box; 11. first portion; 12. second portion;
20. battery cell; 201. housing;
21. shell;
22. electrode assembly; 221. positive electrode tab; 222. negative electrode tab;
23. end cover assembly;
231. wall portion; 232. accommodating groove; 2321. bottom wall; 2321a. first through hole; 2321b. groove; 2322. first accommodating section; 2323. second accommodating section; 2323a. first accommodating sub-section; 2323b. second accommodating sub-section; 2324. first step surface; 233. cover plate; 234. insulating member; 235. first electrode terminal; 236. second electrode terminal;
24. gas-permeable assembly; 241. fixing member; 2411. second through hole; 242. gas-permeable film; 2421. covering portion; 2422. connecting portion;
25. support member; 251. elastic sealing ring;
235. positive electrode terminal; 236. negative electrode terminal;
X. first direction; and Y. radial direction.

### DESCRIPTION OF EMBODIMENTS

The embodiments of the technical solutions of this application are described in detail below with reference to the accompanying drawings. The following embodiments are merely intended for a clearer description of the technical solutions of this application and therefore are used as examples, which do not constitute any limitations on the protection scope of this application.

It should be noted that unless otherwise specified, the technical or scientific terms used in an embodiment of this application shall have the ordinary meanings as understood by those skilled in the art to which this application pertains.

In the description of an embodiment of this application, the technical terms "center," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like indicate orientations or positional relationships based on the orientations or positional relationships shown in the drawings. These terms are used merely to facilitate and simplify the description of an embodiment of this application, and do not indicate or imply that the referred device or element must have a specific orientation, be constructed, and operate in a specific orientation. Therefore, they shall not be understood as limitations on an embodiment of this application.

In addition, the technical terms "first," "second," and the like are merely for descriptive purposes and shall not be understood as any indication or implication of relative importance or any implicit indication of the number of technical features indicated. In the description of an embodiment of this application, "multiple" means two or more, unless otherwise explicitly specified.

In the description of an embodiment of this application, unless otherwise explicitly specified and defined, the technical terms "mount," "join," "connect," "fix," and the like shall be understood in a broad sense. For example, they may refer to a fixed connection, a detachable connection, or an integral connection; they may refer to a mechanical connection or an electrical connection; they may refer to a direct connection or an indirect connection through an intermediate medium; or they may refer to an internal communication between two elements or an interaction relationship between two elements. For those skilled in the art, the specific meanings of the above terms in an embodiment of this application can be understood based on specific circumstances.

In the description of an embodiment of this application, unless otherwise explicitly specified and defined, a first feature being "on" or "under" a second feature may mean that the first feature and the second feature are in direct contact, or the first feature and the second feature are in indirect contact through an intermediate medium. Moreover, the first feature being "above," "over," or "on top of" the second feature may mean that the first feature is directly above or obliquely above the second feature, or simply that the first feature is at a higher level than the second feature. The first feature being "below," "beneath," or "under" the second feature may mean that the first feature is directly below or obliquely below the second feature, or simply that the first feature is at a lower level than the second feature.

Currently, from the perspective of market development, the application of traction batteries is becoming increasingly widespread. Traction batteries are not only used in energy storage systems such as hydroelectric, thermal, wind, and solar power plants but are also widely applied in electric vehicles such as electric bicycles, electric motorcycles, and electric cars, as well as in military equipment, aerospace, and other fields. With the continuous expansion of the application fields of traction batteries, the market demand for them is also constantly increasing.

In related technologies, to prevent thermal runaway in battery cells, gas-permeable assemblies are typically provided on battery cells. During long-term use and cycling of battery cells, there is a possibility of failure at the composite interface between components of the gas-permeable assembly, leading to seal failure and electrolyte leakage of the battery cells, which affects the reliability of the battery cells.

To mitigate the issue of seal failure and electrolyte leakage in battery cells, a support member can be provided to support corresponding components in the gas-permeable assembly, reducing the risk of failure at the composite interface between components of the gas-permeable assembly. This improves the reliability of the battery cells.

Based on the above considerations, to address the issue of seal failure and electrolyte leakage in battery cells, a battery cell has been designed, including a housing, a gas-permeable assembly, and a support member. The housing is configured to accommodate an electrode assembly, the housing includes a wall portion, an outer surface of the wall portion is provided with an accommodating groove extending along a first direction, a bottom wall of the accommodating groove is provided with a first through hole, and the first through hole is configured for communication between an internal space of the housing and an accommodating cavity of the accommodating groove. The gas-permeable assembly is at least partially disposed in the accommodating groove and spaced apart from the bottom wall of the accommodating groove, the gas-permeable assembly includes a fixing member and a gas-permeable film, the fixing member is connected to the wall portion, the fixing member is provided with a second through hole extending along the first direction, the gas-permeable film includes a covering portion and a connecting portion disposed around the covering portion, the covering portion covers the second through hole along the first direction and is configured to discharge gas inside the battery cell, and the connecting portion is connected to the fixing member. The support member is at least partially clamped between the bottom wall of the accommodating groove and the connecting portion.

In such a battery cell, since the support member is provided, and at least a portion of the support member is clamped between the bottom wall of the accommodating groove and the connecting portion, the support member is configured to provide a supporting force to the connecting portion, preventing separation between the connecting portion and the fixing member, mitigating the issue of seal failure and electrolyte leakage in the battery cell, and improving the reliability of the battery cell.

The technical solutions described in an embodiment of this application are applicable to batteries and electric apparatuses using batteries.

The electric apparatus may be a vehicle, a mobile phone, a portable device, a laptop, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, or the like. The electric toy includes a fixed or mobile electric toy, for example, a game console, an electric toy car, an electric toy ship, or an electric toy airplane. The electric tool includes an electric metal cutting tool, an electric grinding tool, an electric assembly tool, or an electric railway-specific tool, for example, an electric drill, an electric grinder, an electric wrench, an electric screwdriver, an electric hammer, an electric impact drill, a concrete vibrator, or an electric planer. An embodiment of this application imposes no specific restrictions on the above electric apparatuses.

It should be understood that the technical solutions described in an embodiment of this application are not limited to the batteries and electric devices described above but can also be applied to all batteries including a box and electric devices using batteries. For brevity, the following embodiments are described using electric vehicles as an example.

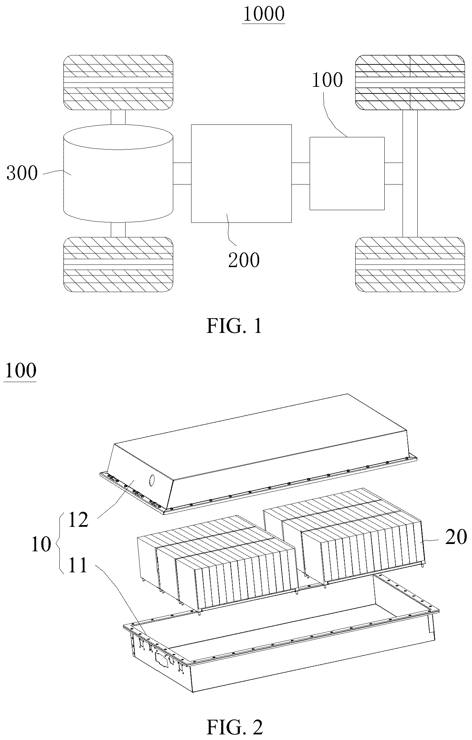

Referring to FIG. 1, FIG. 1 is a schematic structural diagram of a vehicle 1000 provided by some embodiments of this application. A battery 100 is disposed inside the vehicle 1000, and the battery 100 may be disposed at the bottom, head, or tail of the vehicle 1000. The battery 100 is configured to supply power to the vehicle 1000. For example, the battery 100 may be used as an operational power source for the vehicle 1000.

The vehicle 1000 may further include a controller 200 and a motor 300, where the controller 200 is configured to control the battery 100 to supply power to the motor 300, for example, for the operational power requirements during starting, navigation, and driving of the vehicle 1000.

In some embodiments of this application, the battery 100 may not only serve as an operational power source for the vehicle 1000 but also as a driving power source for the vehicle 1000, replacing or partially replacing fuel or natural gas to provide driving power for the vehicle 1000.

Referring to FIG. 2, FIG. 2 is a schematic structural diagram of a battery 100 provided by some embodiments of this application. The battery 100 includes a box 10 and a battery cell 20, where the box 10 is configured to accommodate the battery cell 20.

The box 10 is a component configured to accommodate the battery cell 20, providing an accommodating space for the battery cell 20. The box 10 may adopt various structures. In some embodiments, the box 10 may include a first portion 11 and a second portion 12. The first portion 11 and the second portion 12 fit together to jointly define an accommodating space for accommodating the battery cell 20. The first portion 11 and the second portion 12 may have various shapes, for example, cuboid or cylinder. The first portion 11 may be a hollow structure with one side open, and the second portion 12 may also be a hollow structure with one side open, where the open side of the second portion 12 is engaged with the open side of the first portion 11 to form a box 10 having an accommodating space. Alternatively, the first portion 11 may be a hollow structure with one side open, and the second portion 12 may be a plate structure, where the second portion 12 covers the open side of the first portion 11 to form a box 10 having an accommodating space. The first portion 11 and the second portion 12 may be sealed by a sealing element, and the sealing element may be a sealing ring, a sealing adhesive, or the like.

In the battery 100, the battery cell 20 may be one or multiple. If there are multiple battery cells 20, the multiple battery cells 20 may be connected in series, parallel, or series-parallel, where being connected in series-parallel refers to a combination of both series and parallel connections among the multiple battery cells 20. A battery module may be formed by connecting multiple battery cells 20 in series, parallel, or series-parallel, and then multiple battery modules are connected in series, parallel, or series-parallel to form an entirety, which is accommodated in the box 10. Alternatively, all the battery cells 20 may be directly connected in series, parallel, or series-parallel to form an entirety, which is then accommodated in the box 10.

Each battery cell 20 may be a secondary battery or a primary battery and may also be a lithium-sulfur battery, a sodium-ion battery, or a magnesium-ion battery, but is not limited thereto. The battery cell 20 may be cylindrical, flat, cuboid, or of other shapes. The battery cell 20 is the smallest unit constituting a battery.

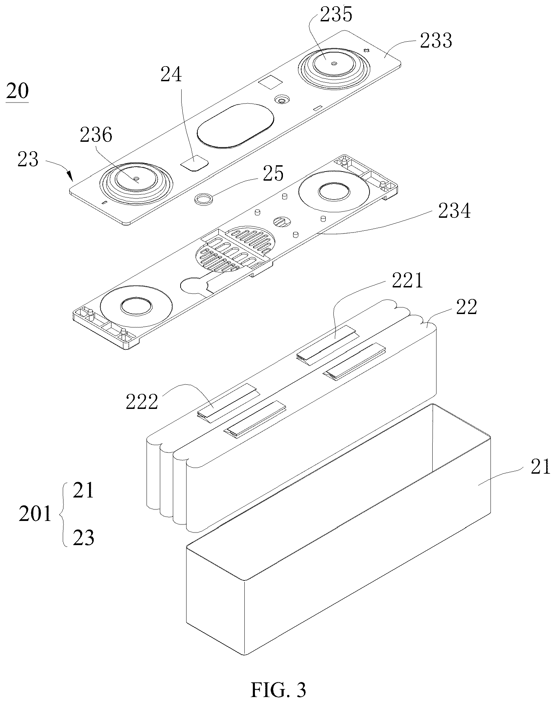

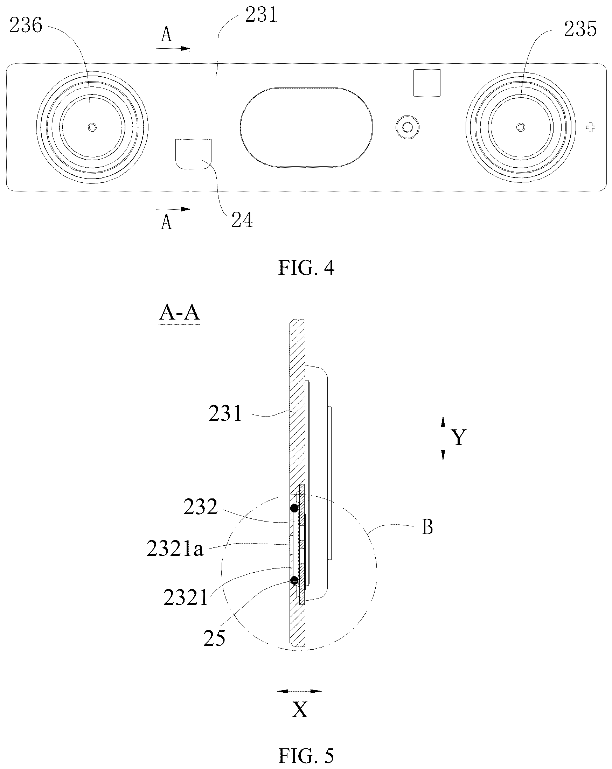

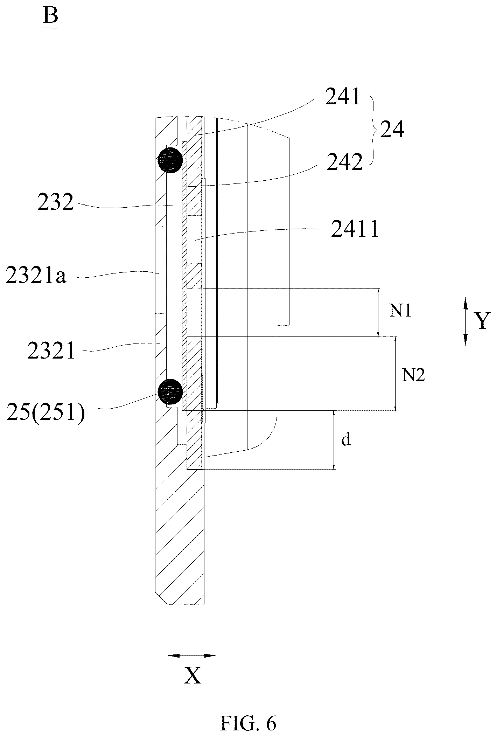

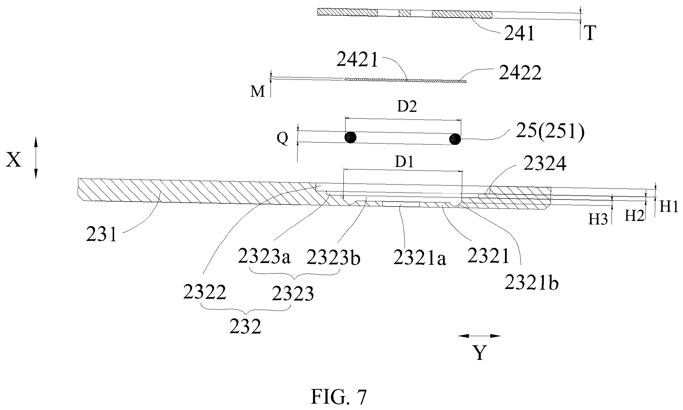

As shown in FIG. 3, further referring to FIGs. 3 to 7, FIG. 4 is a schematic partial structural diagram of a battery cell provided by an embodiment of this application, FIG. 5 is a cross-sectional view along the A-A direction in FIG. 4, FIG. 6 is a partial enlarged view at B in FIG. 5, and FIG. 7 is a partial exploded view of a battery cell provided by an embodiment of this application.

An embodiment of this application provides a battery cell 20, including a housing 201, an electrode assembly 22, a gas-permeable assembly 24, and a support member 25. The housing 201 is configured to accommodate the electrode assembly 22. The housing 201 includes a wall portion 231, an outer surface of the wall portion 231 is provided with an accommodating groove 232 extending along a first direction X, a bottom wall 2321 of the accommodating groove 232 is provided with a first through hole 2321a, and the first through hole 2321a is configured for communication between an internal space of the housing 201 and an accommodating cavity of the accommodating groove 232. The gas-permeable assembly 24 is at least partially disposed in the accommodating groove 232 and spaced apart from the bottom wall 2321 of the accommodating groove 232. The gas-permeable assembly 24 includes a fixing member 241 and a gas-permeable film 242, the fixing member 241 is connected to the wall portion 231, the fixing member 241 is provided with a second through hole 2411 extending along the first direction X, the gas-permeable film 242 includes a covering portion 2421 and a connecting portion 2422 disposed around the covering portion 2421, the covering portion 2421 covers the second through hole 2411 along the first direction X and is configured to discharge gas inside the battery cell 20, and the connecting portion 2422 is connected to the fixing member 241. The support member 25 is at least partially clamped between the bottom wall 2321 of the accommodating groove 232 and the connecting portion 2422.

The housing 201 may include a shell 21 and an end cover assembly 23. Optionally, the shell 21 and the end cover assembly 23 may be an integral structure. Alternatively, in some embodiments, the shell 21 and the end cover assembly 23 may be separately provided, where the shell 21 has an opening, and the end cover assembly 23 seals the opening.

The end cover assembly 23 may typically include a cover plate 233, where the cover plate 233 may seal the opening of the shell 21. The wall portion 231 of the housing 201 may include at least one of a side wall or a bottom wall of the shell 21, or may include the cover plate 233 of the end cover assembly 23.

Optionally, the end cover assembly 23 may further include an insulating member 234, where the insulating member 234 is configured to isolate the electrode assembly 22 inside the shell 21 from the cover plate 233 or the like, reducing the risk of short circuits. Exemplarily, the insulating member 234 may include plastic, rubber, or the like.

Optionally, the end cover assembly 23 may further include electrode terminals, where the electrode terminals are configured to be electrically connected to the electrode assembly 22. The number of electrode terminals included in the end cover assembly 23 may be one. When there is one electrode terminal, the electrode terminal is disposed on the cover plate 233 and may be one of a first electrode terminal 235 or a second electrode terminal 236. Optionally, the electrode terminal may be disposed in a central region of the cover plate 233, or may be offset from the central region of the cover plate 233. Alternatively, the end cover assembly 23 may include two electrode terminals, where the two electrode terminals may include the first electrode terminal 235 and the second electrode terminal 236, and the first electrode terminal 235 and the second electrode terminal 236 may be disposed on the cover plate 233.

The electrode assembly 22 is a component in the battery cell 100 where electrochemical reactions occur. The shell 21 may include one or more electrode assemblies 22. The electrode assembly 22 is formed primarily by winding or stacking a positive electrode plate and a negative electrode plate, with a separator typically disposed between the positive electrode plate and the negative electrode plate. Portions of the positive electrode plate and the negative electrode plate with active substances constitute a body portion of the electrode assembly, while portions of the positive electrode plate and the negative electrode plate without active substances each constitute a tab. A positive electrode tab 221 and a negative electrode tab 222 may be located at one end of the body portion together or at two ends of the body portion separately. The positive electrode tab 221 may be connected to one of the first electrode terminal 235 or the second electrode terminal 236, and the negative electrode tab 222 may be connected to the other of the first electrode terminal 235 or the second electrode terminal 236. During the charging and discharging process of the battery, the positive electrode active material and the negative electrode active material react with the electrolyte.

Along the first direction X, a depth of the accommodating groove 232 is less than a thickness of the wall portion 231, and the bottom wall 2321 may be understood as the bottom region of the accommodating groove 232 in the first direction X.

The first through hole 2321a may be disposed to penetrate the bottom wall 2321 of the accommodating groove 232 along the first direction X. The shape of the first through hole 2321a may be circular, elliptical, polygonal, or the like.

The gas-permeable assembly 24 may be partially located in the accommodating groove 232 or entirely located in the accommodating groove 232.

The fixing member 241 may be a component mounted on the wall portion 231. For example, the fixing member 241 may include a plate-like structure mounted on the wall portion 231, and when it is a plate-like structure, the second through hole 2411 may be provided thereon. Alternatively, the fixing member 241 may be an annular structure to ensure gas flow.

The number of the second through holes 2411 provided on the fixing member 241 may be one, or may be two or more. When there are two or more second through holes 2411, the two or more second through holes 2411 may be spaced apart from each other. The two or more second through holes 2411 may be arranged in rows or columns, in an array, sequentially along a circular trajectory, or sequentially along a linear or curved trajectory. When the number of the second through holes 2411 is two or more, the gas-permeable film 242 covers each second through hole 2411 in the first direction X.

The shape of the second through hole 2411 may be circular, elliptical, or kidney-shaped, or the like.

The gas-permeable film 242 has a gas-permeable function, and its material may be PP (polypropylene), PE (polyethylene), PU (polyurethane), or the like. Gas inside the battery cell 20 needs to pass through the gas-permeable film 242 when discharged. The gas-permeable film 242 allows gas inside the battery cell 20 to flow to the outside and to block moisture and the like from outside the battery cell 20 from entering the inside of the battery cell 20.

The covering portion 2421 has a gas-permeable function and may be made of a gas-permeable material. The connecting portion 2422 may have a gas-permeable function and may be made of a gas-permeable material. Alternatively, the connecting portion 2422 may not have a gas-permeable function, that is, it may be made of a non-gas-permeable material.

The covering portion 2421 may be located on the inner side of the connecting portion 2422, and the connecting portion 2422 may be entirely annular and disposed around the covering portion 2421. The two may be an integral structure, or they may be separately made and connected to form an integral structure.

When the number of the second through holes 2411 is two or more, an orthographic projection of the covering portion 2421 in the first direction X covers each second through hole 2411.

The connecting portion 2422 of the gas-permeable film 242 may be connected to the fixing member 241 by bonding, chemical bonding, or the like.

The support member 25 may be an annular structure disposed around the first through hole 2321a, or it may include multiple support bodies, where the multiple support bodies may be spaced apart from each other or sequentially spliced. The support bodies are configured to provide a supporting force to the connecting portion 2422.

According to the battery cell provided in an optional embodiment of this application, the wall portion 231 of the housing 201 is provided with the gas-permeable assembly 24, where the gas-permeable assembly 24 includes the fixing member 241 and the gas-permeable film 242, the fixing member 241 is provided with the second through hole 2411 extending along the first direction X, and the gas-permeable film 242 includes the covering portion 2421 and the connecting portion 2422 disposed around the covering portion 2421. The covering portion 2421 covers the second through hole 2411 along the first direction X and is configured to discharge gas inside the battery cell 20, where gas inside the battery cell 20 can flow through the first through hole 2321a to the covering portion 2421 and be discharged to the outside of the battery cell 20 through the second through hole 2411, preventing excessive gas accumulation that could lead to thermal runaway of the battery cell 20. The connecting portion 2422 is connected to the fixing member 241, and the gas-permeable film 242 prevents electrolyte inside the battery cell 20 from flowing to the outside of the battery cell 20. The arrangement of the support member 25 can provide support to the connecting portion 2422, reducing the risk of failure at the composite interface between the connecting portion 2422 and the fixing member 241, thus ensuring the tightness of the connection therebetween. This reduces the probability of seal failure and electrolyte leakage in the battery cell 20, improving the reliability of the battery cell 20.

In some embodiments, the support member 25 is entirely annular, and the support member 25 is disposed around the first through hole 2321a, and is sealingly engaged with the connecting portion 2422 and the bottom wall 2321 of the accommodating groove 232, separately.

The support member 25 may be in a shape of a closed circular ring, an elliptical ring, or a polygonal ring. Along the first direction X, an orthographic projection of the first through hole 2321a is located inside the support member 25.

The support member 25 may achieve sealing engagement with the connecting portion 2422 and the bottom wall 2321 of the accommodating groove 232 by tight contact. For example, the support member 25 may adopt an elastic structure, achieving tight contact by compressing the support member 25 in the first direction X, thereby ensuring sealing engagement. Alternatively, the support member 25 may achieve sealing engagement with the connecting portion 2422 and the bottom wall 2321 of the accommodating groove 232 by bonding.

Through the above arrangement, the support member 25 can block the path of electrolyte inside the battery cell 20 from flowing to the composite interface between the connecting portion 2422 and the fixing member 241, reducing or preventing the electrolyte from flowing to the composite interface between the connecting portion 2422 and the fixing member 241, thus ensuring the tightness of the connection therebetween. This effectively reduces the probability of seal failure and electrolyte leakage in the battery cell 20, improving the reliability of the battery cell 20.

In some optional embodiments, a side surface of the bottom wall 2321 of the accommodating groove 232 facing the gas-permeable assembly 24 is recessed with a groove 2321b, and the support member 25 is partially accommodated in the groove 2321b.

The shape of the groove 2321b may match the bottom shape of the support member 25. When the support member 25 is entirely annular, the groove 2321b may be an annular groove. When the support member 25 includes multiple support bodies, the groove 2321b may be an annular groove or may include multiple groove bodies corresponding to each support body.

Through the above arrangement, the groove 2321b can limit the position of the support member 25, facilitating the mounting and positioning of the support member 25. Additionally, during the operation of the battery cell 20, the support member 25 is prevented from moving within the accommodating groove 232, which could affect the support provided to the connecting portion 2422, thereby ensuring the support for the composite interface between the connecting portion 2422 and the fixing member 241.

Referring to FIGs. 3 to 7, in some optional embodiments, the support member 25 includes an elastic sealing ring 251, and the elastic sealing ring 251 is compressed in the first direction X and clamped between the connecting portion 2422 and the bottom wall 2321 of the accommodating groove 232.

The number of elastic sealing rings 251 included in the support member 25 may be one, or may be two or more. When there are two or more elastic sealing rings 251, the radial dimensions Y of the two or more elastic sealing rings 251 may gradually increase, and the two or more elastic sealing rings 251 may be distributed along the radial direction Y of the first through hole 2321a.

The elastic sealing ring 251 is disposed around the first through hole 2321a.

When the bottom wall 2321 of the accommodating groove 232 includes the groove 2321b, a groove 2321b may be provided corresponding to each elastic sealing ring 251, and a portion of one side of the elastic sealing ring 251 in the first direction X may be engaged in the corresponding groove 2321b.

As the support member 25 includes the elastic sealing ring 251, and the elastic sealing ring 251 is compressed in the first direction X and clamped between the connecting portion 2422 and the bottom wall 2321 of the accommodating groove 232, a compressive force is provided to the composite interface between the connecting portion 2422 and the fixing member 241 in the first direction X. This provides support to the connecting portion 2422, preventing delamination at the composite interface between the connecting portion 2422 and the fixing member 241, and ensuring sealing performance. Additionally, this arrangement ensures that the elastic sealing ring 251 sealingly engages with the bottom wall 2321 of the accommodating groove 232 and the connecting portion 2422, enabling the support member 25 to block the path of electrolyte inside the battery cell 20 from flowing to the composite interface between the connecting portion 2422 and the fixing member 241, and reducing or preventing the electrolyte from flowing to the composite interface between the connecting portion 2422 and the fixing member 241, thus effectively ensuring the tightness of the connection therebetween.

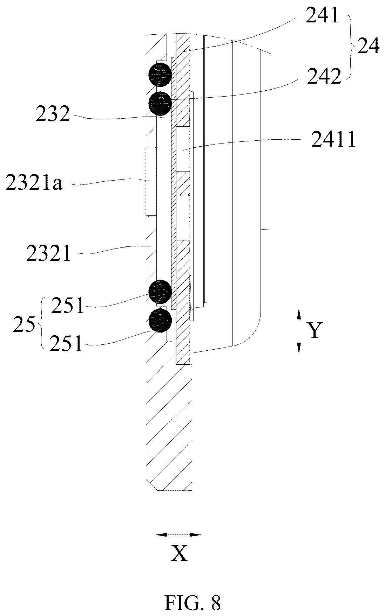

As shown in FIG. 8, in some optional embodiments, the number of elastic sealing rings 251 is two or more, and the two or more elastic sealing rings 251 are coaxially arranged and distributed along the radial direction Y of the first through hole 2321a.

The number of elastic sealing rings 251 may be two, three, or more, specifically determined based on the remaining space in the accommodating groove 232 and the composite area between the connecting portion 2422 and the fixing member 241.

The two or more elastic sealing rings 251 may be arranged sequentially or spaced apart along the radial direction Y of the first through hole 2321a, optionally spaced apart.

By setting the number of elastic sealing rings 251 to two or more, the two or more elastic sealing rings 251 provide multiple layers of barrier protection, effectively blocking the path of electrolyte inside the battery cell 20 from flowing to the composite interface between the connecting portion 2422 and the fixing member 241, and reducing or preventing the electrolyte from flowing to the composite interface between the connecting portion 2422 and the fixing member 241, thus ensuring the reliability of the composite interface.

In some optional embodiments, along the first direction X, an orthographic projection of the elastic sealing ring 251 is in a shape of a circular ring, an elliptical ring, or a polygonal ring.

Along the first direction X, the orthographic projection of the elastic sealing ring 251 may be in the shape of a circular ring, an elliptical ring, or certainly, a polygonal ring.

As the orthographic projection of the elastic sealing ring 251 along the first direction X is in the shape of a circular ring, an elliptical ring, or a polygonal ring, support is ensured for the connecting portion 2422 and the fixing member 241 at all positions along the circumferential direction of the first through hole 2321a, while meeting the requirement of surrounding the first through hole 2321a, blocking the path of electrolyte inside the battery cell 20 from flowing to the composite interface between the connecting portion 2422 and the fixing member 241.

Referring to FIGs. 3 to 8, in some optional embodiments, the accommodating groove 232 includes a first accommodating section 2322 and a second accommodating section 2323 distributed along the first direction X, the first accommodating section 2322 is recessed from the outer surface of the wall portion 231, a radial dimension of the first accommodating section 2322 is greater than a maximum radial dimension of the second accommodating section 2323, a first step surface 2324 is connected between a side wall surface of the first accommodating section 2322 and a side wall surface of the second accommodating section 2323, the fixing member 241 is at least partially located in the first accommodating section 2322 and supported on the first step surface 2324, and at least a portion of the gas-permeable film 242 and/or at least a portion of the support member 25 is disposed in the second accommodating section 2323.

The radial dimension of the first accommodating section 2322 may be greater than the radial dimension at all positions of the second accommodating section 2323.

Along the first direction X, the radial dimension of the second accommodating section 2323 may remain constant, that is, the second accommodating section 2323 may adopt a hole with a constant cross-section. Certainly, along the first direction X, the radial dimension of the second accommodating section 2323 may alternatively vary, that is, the second accommodating section 2323 may alternatively adopt a stepped hole shape.

At least a portion or all of the gas-permeable film 242 may be located in the second accommodating section 2323, or at least a portion or all of the support member 25 may be located in the second accommodating section 2323. Certainly, at least a portion or all of the support member 25 and at least a portion or all of the gas-permeable film 242 may alternatively be located in the second accommodating section 2323.

By adopting the above structure for the accommodating groove 232, the first step surface 2324 can provide support to the fixing member 241 in the first direction X, ensuring the support positioning of the fixing member 241 and its connection requirements with the wall portion 231. At the same time, the first accommodating section 2322 and the second accommodating section 2323 can accommodate and protect the components of the gas-permeable assembly 24.

In some embodiments, along the first direction X, a depth of the first accommodating section 2322 is denoted as H1, and a thickness of the fixing member 241 is denoted as T, where 0.3 ≤ H1/T ≤ 2.5.

The thickness of the fixing member 241 is the maximum thickness of the fixing member 241 in the first direction X. Optionally, the fixing member 241 may adopt a plate-like structure.

The ratio H1/T of the depth of the first accommodating section 2322 to the thickness of the fixing member 241 may be any value between 0.3 and 2.5, inclusive. H1/T may optionally be any value between 0.5 and 2. In some optional examples, H1/T may be 0.8, 1, 1.3, 1.5, 1.7, 1.9, or the like.

By setting the value range of H1/T to 0.3-2.5, the first accommodating section 2322 can limit the position of the fixing member 241, while ensuring that the thickness of the fixing member 241 in the first direction X is moderate. During connection to the wall portion 231, this ensures a connection area with the side wall of the first accommodating section 2322, while reducing a size by which the fixing member 241 protrudes from the first accommodating section 2322 in the first direction X, ensuring the assembly and connection effect of the fixing member 241 in the accommodating groove 232.

In some optional embodiments, the ratio H1/T of the depth H1 of the first accommodating section 2322 to the thickness T1 of the fixing member 241 may range from: 1 ≤ H1/T ≤ 2.5.

The value range of H1/T may be any value between 1 and 2.5, including the two endpoints of 1 and 2. Optionally, it may be 1.2 ≤ H1/T ≤ 2. In some optional embodiments, H1/T may be 1.3, 1.4, 1.5, 1.6, 1.7, 1.8, 1.9, or the like.

By setting 1 ≤ H1/T ≤ 2.5, it can be ensured that the fixing member 241 is entirely located in the first accommodating section 2322, meeting the connection requirements with the side wall of the first accommodating section 2322, and the fixing member 241 does not protrude from the wall portion 231, ensuring smooth assembly and avoiding interference with the mounting of gas components of the battery cell 20.

In some optional embodiments, the second accommodating section 2323 includes a first accommodating sub-section 2323a and a second accommodating sub-section 2323b distributed along the first direction X, a radial dimension of the first accommodating sub-section 2323a is greater than a radial dimension of the second accommodating sub-section 2323b and smaller than the radial dimension of the first accommodating section 2322, the first step surface 2324 is connected between a side wall surface of the first accommodating sub-section 2323a and the side wall surface of the first accommodating section 2322, at least a portion of the gas-permeable film 242 is located in the first accommodating sub-section 2323a, and at least a portion of the support member 25 is located in the second accommodating sub-section 2323b.

Along the first direction X, the first accommodating sub-section 2323a is located between the first accommodating section 2322 and the second accommodating sub-section 2323b. Along the first direction X, the accommodating groove 232 may form a stepped groove with progressively decreasing radial dimensions.

In the battery cell 20 provided by the embodiments of this application, through the above arrangement, the first accommodating section 2322 is configured to accommodate the fixing member 241, the first accommodating sub-section 2323a is configured to accommodate the gas-permeable film 242, and the second accommodating sub-section 2323b is configured to accommodate at least a portion of the support member 25.

Through the above arrangement, the accommodating groove 232 can form a stepped groove with progressively decreasing radial dimensions, ensuring the accommodation requirements for the fixing member 241, the gas-permeable film 242, and the support member 25, while meeting their mounting and positioning requirements.

In some optional embodiments, along the first direction X, a depth of the first accommodating sub-section 2323a is denoted as H2, and a thickness of the gas-permeable film 242 is denoted as M, where 0 ≤ H2-M ≤ 0.7 mm.

The difference H2-M between the depth H2 of the first accommodating sub-section 2323a and the thickness M of the gas-permeable film 242 may be any value between 0 and 0.7 mm, including the two endpoints of 0 and 0.7 mm. H2-M is optionally any value between 0 and 0.5 mm. In some optional embodiments, H2-M is optionally 0.1 mm, 0.2 mm, 0.3 mm, or 0.4 mm.

By setting 0 ≤ H2-M ≤ 0.7 mm, interference between the gas-permeable film 242 and the first accommodating sub-section 2323a during assembly is prevented, ensuring the connection between the fixing member 241 and the wall portion 231.

In some optional embodiments, along the first direction X, a depth of the second accommodating sub-section 2323b is denoted as H3, and a thickness of the support member 25 is denoted as Q, where 0.1 ≤ H3/Q ≤ 0.95.

The ratio H3/Q of the depth H3 of the second accommodating sub-section 2323b to the thickness Q of the support member 25 may range from 0.1 to 0.95, including the endpoints 0.1 and 0.95. In some optional embodiments, the value range of H3/Q may be any value between 0.2 and 0.95. H3/Q is optionally 0.3, 0.4, 0.5, 0.6, 0.7, 0.8, or 0.9.

When the support member 25 is an elastic sealing ring 251, the thickness Q of the support member 25 is the thickness in a free state. Specifically, when the support member 25 includes the elastic sealing ring 251, the thickness of the support member 25 may be understood as the thickness dimension of the elastic sealing ring 251 in the first direction X when it is not subjected to external force, that is, when it is not compressed.

By setting 0.1 ≤ H3/Q ≤ 0.95, the support member 25 can be in a compressed state when mounted between the bottom wall 2321 and the connecting portion 2422, ensuring tight contact with the bottom wall 2321 and the connecting portion 2422, achieving electrolyte isolation, and improving the air tightness of the battery cell 20.

In some embodiments, along the radial direction Y of the first through hole 2321a, a gap exists between the support member 25 and a side wall of the second accommodating sub-section 2323b.

Through the above arrangement, when the fixing member 241 is connected to the wall portion 231 by welding or other methods, the heat generated by welding does not affect the support member 25. Additionally, when an elastic sealing ring 251 is used as the support member 25, this arrangement provides space for compressive deformation of the elastic sealing ring 251, ensuring the sealing effect.

In some embodiments, along the radial direction Y of the first through hole 2321a, an outer diameter of the second accommodating sub-section 2323b is denoted as D1, and an outer diameter of the support member 25 is denoted as D2, where 0.2 ≤ D2/D1 ≤ 0.95.

The outer diameter of the support member 25 may be understood as the vertical distance from the outermost surface of the support member 25 to its center position. Exemplarily, when the support member 25 includes one elastic sealing ring 251, the outer diameter of the support member 25 may be understood as the vertical distance from the outermost surface of the elastic sealing ring 251 to its center position. When the support member 25 includes two or more elastic sealing rings 251, the outer diameter of the support member 25 may be understood as the vertical distance from the outermost surface of the outermost elastic sealing ring 251 to its center position.

The ratio D2/D1 of the outer diameter D2 of the support member 25 to the outer diameter D1 of the second accommodating sub-section 2323b may be any value between 0.2 and 0.95, including the endpoints 0.2 and 0.95. It may optionally be any value between 0.3 and 0.95. Exemplarily, it may be 0.4, 0.5, 0.6, 0.7, 0.8, or 0.9.

By setting 0.2 ≤ D2/D1 ≤ 0.95, it is effectively ensured that when the fixing member 241 is connected to the wall portion 231 by welding or other methods, the heat generated by welding does not affect the support member 25. Additionally, when the elastic sealing ring 251 is used as the support member 25, this arrangement helps to provide space for compressive deformation of the elastic sealing ring 251, ensuring the sealing effect.

The number of the second through holes 2411 provided on the fixing member 241 may be one.

Alternatively, in some optional embodiments, the number of the second through holes 2411 may be plural and spaced apart on the fixing member 241.

Alternatively, it may be two or more, and when there are two or more, the two or more second through holes 2411 may be spaced apart from each other. The two or more second through holes 2411 may be arranged in rows or columns, in an array, sequentially along a circular trajectory, or sequentially along a linear or curved trajectory. When the number of the second through holes 2411 is two or more, the gas-permeable film 242 covers each second through hole 2411 in the first direction X.

By setting the number of the second through holes 2411 to two or more, the exhaust requirements are ensured. At the same time, the size of each second through hole 2411 is moderate, avoiding excessive diameter that could affect the strength of the fixing member 241, and preventing overly small diameter that could impact gas permeability efficiency. Additionally, a region between two adjacent second through holes 2411 can be attached to the gas-permeable film 242. When gas inside the battery cell 20 acts on the gas-permeable film 242 during discharge to the outside of the battery cell 20 through the gas-permeable film, the fixing member 241 provides a force opposite to the internal pressure of the battery cell 20 to the gas-permeable film 242 through the region between two adjacent second through holes 2411, reducing deformation of the gas-permeable film 242, and improving the overall internal pressure resistance of the gas-permeable assembly 24, thus enhancing the reliability of the battery cell 20.

In some optional embodiments, a diameter N1 of the second through hole 2411 ranges from 0.5 mm to 3 mm.

The diameter N1 of the second through hole 2411 may range from 0.5 mm to 3 mm, including the endpoints of 0.5 mm and 3 mm. It is optionally from 1 mm to 2 mm, and may be 1.3 mm, 1.5 mm, 1.8 mm, or the like.

By setting the diameter N1 of the second through hole 2411 to range from 0.5 mm to 3 mm, the exhaust requirements of the second through hole 2411 are ensured. This facilitates the setting of the number of the second through holes 2411 to two or more, and ensures the strength of the fixing member 241, thus improving the gas permeability efficiency of the second through hole 2411.

The number of the second through holes 2411 may be plural, and along the radial direction of the first through hole 2321a, multiple minimum vertical distances exist between an outer edge of the gas-permeable film 242 and hole walls of the multiple second through holes 2411, where a minimum value of the multiple minimum vertical distances N2 ranges from 1 mm to 6 mm.

Certainly, in some optional embodiments, the number of the second through holes 2411 is one, and along the radial direction Y of the first through hole 2321a, a minimum vertical distance N2 between the outer edge of the gas-permeable film 242 and a hole wall of the second through hole 2411 ranges from 1 mm to 6 mm.

When the number of the second through holes 2411 is one, the minimum vertical distance N2 between the outer edge of the gas-permeable film 242 and the hole wall of the second through hole 2411 may be any value between 1 mm and 6 mm, including 1 mm and 6 mm. It is optionally from 2 mm to 5 mm, and may be 2 mm, 3 mm, 4 mm, or 5 mm.

When the number of the second through holes 2411 is plural, among the multiple second through holes 2411 in the radial direction Y of the first through hole 2321a, there are second through holes 2411 disposed closer to the outer edge of the gas-permeable film 242 and second through holes 2411 disposed relatively farther from the outer edge of the gas-permeable film 242. Compared to other second through holes 2411, the second through hole 2411 located on the outer side in the radial direction Y and closest to the edge of the gas-permeable film 242 has a minimum vertical distance N2 to the edge of the gas-permeable film, which may be any value between 1 mm and 6 mm, including 1 mm and 6 mm. It is optionally from 2 mm to 5 mm, and may be 2 mm, 3 mm, 4 mm, or 5 mm.

Through the above arrangement, whether one or more second through holes 2411 are used, the distance between the hole wall of the second through hole 2411 and the edge of the gas-permeable film 242 is moderate, ensuring the bonding strength between the gas-permeable film 242 and the fixing member 241, while ensuring the gas permeability effect.

In some optional embodiments, along the radial direction Y of the first through hole 2321a, a first vertical distance between the outer edge of the gas-permeable film 242 and an outer edge of the fixing member 241 is denoted as d, where d ranges from 1 mm to 5 mm.

The value range of d may be any value between 1 mm and 5 mm, including the endpoints 1 mm and 5 mm. It is optionally any value between 1.5 mm and 4 mm, and may be, for example, 2 mm or 3 mm.

By setting the value range of d to 1 mm-5 mm, the value of d is moderate, ensuring that residual heat from laser welding does not melt the gas-permeable film 242 when the fixing member 241 is connected to the wall portion 231 by welding or other methods, and avoiding an excessively large d value. This ensures the number of gas-permeable holes, thus ensuring the gas permeability effect.

In the battery cell provided in some embodiments of this application, along the first direction X, the first accommodating section 2322 may be located on a side of the second accommodating section 2323 facing away from the electrode assembly 22.

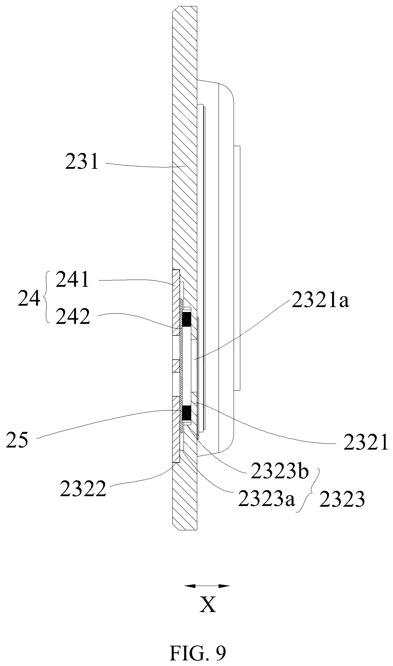

Certainly, as shown in FIG. 9, the first accommodating section 2322 may be located on a side of the second accommodating section 2323 facing the electrode assembly 22.

The shell 21 and the end cover assembly 23 together form the housing 201 of the battery cell 20. The shell 21 is a component configured to cooperate with the end cover assembly 23 to form an internal environment of the battery cell 20, where the formed internal environment is configured to accommodate the electrode assembly 22, electrolyte, and other components. The shell 21 and the end cover assembly 23 may be independent components, an opening may be formed in the shell 21, and the end cover assembly 23 covers the opening to form the internal environment of the battery cell 20. The end cover assembly 23 and the shell 21 are not limited and may also be integrated. Specifically, the end cover assembly 23 and the shell 21 may form a shared connection surface before other components are disposed in the shell, and then the shell 21 is covered with the end cover assembly 23 when the inside of the shell 21 needs to be enclosed. The shell 21 may have various shapes and sizes, such as cuboid, cylindrical, or hexagonal prism. Specifically, the shape of the shell 21 may be determined according to the specific shape and size of the electrode assembly 22. The shell 21 may be made of various materials, such as copper, iron, aluminum, stainless steel, aluminum alloy, or plastic, which are not particularly limited in the embodiments of this application.

The battery cell 20 provided by the embodiments of this application includes a housing 201, a gas-permeable assembly 24, and a support member 25. The housing 201 includes a shell 21 and an end cover assembly 23, the shell 21 has an opening, the end cover assembly 23 seals the opening, and the wall portion 231 may be a cover plate 233 of the end cover assembly 23. An outer surface of the wall portion 231 is provided with an accommodating groove 232 extending along a first direction X. The gas-permeable assembly 24 is at least partially disposed in the accommodating groove 232 and spaced apart from a bottom wall 2321 of the accommodating groove 232. The gas-permeable assembly 24 includes a fixing member 241 and a gas-permeable film 242, the fixing member 241 is connected to the wall portion, the fixing member 241 is provided with multiple second through holes 2411 extending along the first direction X, the gas-permeable film 242 includes a covering portion 2421 and a connecting portion 2422 disposed around the covering portion 2421, the covering portion 2421 covers the second through holes 2411 along the first direction X and is configured to discharge gas inside the battery cell 20, and the connecting portion 2422 is connected to the fixing member 241. The accommodating groove 232 includes a first accommodating section 2322 and a second accommodating section 2323 distributed along the first direction X, the first accommodating section 2322 is recessed from the outer surface of the wall portion 231, a radial dimension Y of the first accommodating section 2322 is greater than a maximum radial dimension Y of the second accommodating section 2323, the second accommodating section 2323 includes a first accommodating sub-section 2323a and a second accommodating sub-section 2323b distributed along the first direction X, a radial dimension Y of the first accommodating sub-section 2323a is greater than a radial dimension Y of the second accommodating sub-section 2323b and smaller than the radial dimension Y of the first accommodating section 2322, a first step surface 2324 is connected between a side wall surface of the first accommodating sub-section 2323a and the side wall surface of the first accommodating section 2322, at least a portion of the gas-permeable film 242 is located in the first accommodating sub-section 2323a, and at least a portion of the support member 25 is located in the second accommodating sub-section 2323b. The support member 25 is entirely annular, the support member 25 is disposed around the first through hole 2321a, and is sealingly engaged with the connecting portion 2422 and the bottom wall 2321 of the accommodating groove 232, separately. The support member 25 includes an elastic sealing ring 251, and the elastic sealing ring 251 is compressed in the first direction X and clamped between the connecting portion 2422 and the bottom wall 2321 of the accommodating groove 232. A side surface of the bottom wall 2321 of the accommodating groove 232 facing the gas-permeable assembly 24 is recessed with a groove 2321b, and an elastic sealing portion of the support member 25 is partially accommodated in the groove 2321b.

According to some embodiments of this application, this application further provides a battery including the battery cell 20 according to any one of the foregoing solutions.

According to some embodiments of this application, this application further provides an electric apparatus including the battery according to any one of the foregoing solutions, where the battery is configured to supply electric energy to the electric apparatus.

The electric apparatus may be any one of the foregoing devices or systems using a battery.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed herein but includes all technical solutions falling within the scope of the claims.

## Claims

1. A battery cell, **characterized by** comprising:
an electrode assembly;
a housing configured to accommodate the electrode assembly, wherein the housing comprises a wall portion, an outer surface of the wall portion is provided with an accommodating groove extending along a first direction, a bottom wall of the accommodating groove is provided with a first through hole, and the first through hole is configured for communication between an internal space of the housing and an accommodating cavity of the accommodating groove;
a gas-permeable assembly, at least partially disposed in the accommodating groove and spaced apart from the bottom wall of the accommodating groove, wherein the gas-permeable assembly comprises a fixing member and a gas-permeable film, the fixing member is connected to the wall portion, the fixing member is provided with a second through hole extending along the first direction, the gas-permeable film comprises a covering portion and a connecting portion disposed around the covering portion, the covering portion covers the second through hole along the first direction and is configured to discharge gas inside the battery cell, and the connecting portion is connected to the fixing member; and
a support member, at least partially clamped between the bottom wall of the accommodating groove and the connecting portion.

2. The battery cell according to claim 1, **characterized in that** the support member is entirely annular, and the support member is disposed around the first through hole, and is sealingly engaged with the connecting portion and the bottom wall of the accommodating groove, separately.

3. The battery cell according to claim 1 or 2, **characterized in that** a side surface of the bottom wall of the accommodating groove facing the gas-permeable assembly is recessed with a groove, and the support member is partially accommodated in the groove.

4. The battery cell according to any one of claims 1 to 3, **characterized in that** the accommodating groove comprises a first accommodating section and a second accommodating section distributed along the first direction, the first accommodating section is recessed from the outer surface of the wall portion, a radial dimension of the first accommodating section is greater than a maximum radial dimension of the second accommodating section, a first step surface is connected between a side wall surface of the first accommodating section and a side wall surface of the second accommodating section, the fixing member is at least partially located in the first accommodating section and supported on the first step surface, and at least a portion of the gas-permeable film and/or at least a portion of the support member is disposed in the second accommodating section.

5. The battery cell according to claim 4, **characterized in that** along the first direction, a depth of the first accommodating section is denoted as H1, and a thickness of the fixing member is denoted as T, wherein 0.3 ≤ H1/T ≤ 2.5.

6. The battery cell according to claim 5, wherein 1 ≤ H1/T ≤ 2.5.

7. The battery cell according to any one of claims 4 to 6, **characterized in that** the second accommodating section comprises a first accommodating sub-section and a second accommodating sub-section distributed along the first direction, a radial dimension of the first accommodating sub-section is greater than a radial dimension of the second accommodating sub-section and smaller than the radial dimension of the first accommodating section, the first step surface is connected between a side wall surface of the first accommodating sub-section and the side wall surface of the first accommodating section, at least a portion of the gas-permeable film is located in the first accommodating sub-section, and at least a portion of the support member is located in the second accommodating sub-section.

8. The battery cell according to claim 7, **characterized in that** along the first direction, a depth of the first accommodating sub-section is denoted as H2, and a thickness of the gas-permeable film is denoted as M, wherein 0 ≤ H2-M ≤ 0.7 mm.

9. The battery cell according to claim 7 or 8, **characterized in that** along the first direction, a depth of the second accommodating sub-section is denoted as H3, and a thickness of the support member is denoted as Q, wherein 0.1 ≤ H3/Q ≤ 0.95.

10. The battery cell according to any one of claims 7 to 9, **characterized in that** along a radial direction of the first through hole, a gap exists between the support member and a side wall of the second accommodating sub-section.

11. The battery cell according to claim 10, **characterized in that** along the radial direction of the first through hole, an outer diameter of the second accommodating sub-section is denoted as D1, and an outer diameter of the support member is denoted as D2, wherein 0.2 ≤ D2/D1 ≤ 0.95.

12. The battery cell according to any one of claims 1 to 11, **characterized in that** the support member comprises an elastic sealing ring, and the elastic sealing ring is compressed in the first direction and clamped between the connecting portion and the bottom wall of the accommodating groove.

13. The battery cell according to claim 12, **characterized in that** a quantity of the elastic sealing rings is two or more, and the two or more elastic sealing rings are coaxially arranged and distributed along the radial direction of the first through hole.

14. The battery cell according to claim 12 or 13, **characterized in that** along the first direction, an orthographic projection of the elastic sealing ring is in a shape of a circular ring, an elliptical ring, or a polygonal ring.

15. The battery cell according to any one of claims 1 to 14, **characterized in that** a quantity of the second through holes is plural, and the second through holes are spaced apart on the fixing member.

16. The battery cell according to claim 15, **characterized in that** a diameter of the second through hole ranges from 0.5 mm to 3 mm.

17. The battery cell according to any one of claims 1 to 16, **characterized in that** the second through hole is one, and along the radial direction of the first through hole, a minimum vertical distance between an outer edge of the gas-permeable film and a hole wall of the second through hole is denoted as N, wherein N ranges from 1 mm to 6 mm; or
the second through holes are plural, and along the radial direction of the first through hole, multiple minimum vertical distances exist between the outer edge of the gas-permeable film and hole walls of the multiple second through holes, wherein a minimum value of the multiple minimum vertical distances is denoted as N, and N ranges from 1 mm to 6 mm.

18. The battery cell according to any one of claims 1 to 17, **characterized in that** along the radial direction of the first through hole, a first vertical distance between the outer edge of the gas-permeable film and an outer edge of the fixing member is denoted as d, wherein d ranges from 1 mm to 5 mm.

19. The battery cell according to any one of claims 1 to 18, **characterized in that** the housing comprises a shell and an end cover assembly, the shell has an opening, the end cover assembly seals the opening, and one of the shell and the end cover assembly comprises the wall portion.

20. A battery, **characterized by** comprising the battery cell according to any one of claims 1 to 19.

21. An electric apparatus, **characterized by** comprising the battery according to claim 20, wherein the battery is configured to provide electric energy.
